(19) **Europäisches Patentamt**
**European Patent Office**
**Office européen des brevets**

(11) **EP 4 494 774 B1**

(12) **EUROPEAN PATENT SPECIFICATION**

(45) Date of publication and mention
of the grant of the patent:
**29.04.2026 Bulletin 2026/18**

(21) Application number: **24187808.1**

(22) Date of filing: **10.07.2024**

(51) International Patent Classification (IPC):
**B21C 47/00** *(2006.01)* **B21C 47/04** *(2006.01)*
**B21C 47/12** *(2006.01)* **B21C 47/34** *(2006.01)*

(52) Cooperative Patent Classification (CPC):
**B21C 47/003; B21C 47/04; B21C 47/12;**
**B21C 47/34; B21C 47/3408; B21C 47/3425;**
**B21C 47/345;** B65H 54/28

(54) **ROLLED PRODUCT WINDING SYSTEM AND METHOD**

WICKELSYSTEM UND -VERFAHREN FÜR GEWALZTE PRODUKTE

SYSTÈME ET PROCÉDÉ D'ENROULEMENT DE PRODUIT LAMINÉ

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**

(30) Priority: **20.07.2023 IT 202300015246**

(43) Date of publication of application:
**22.01.2025 Bulletin 2025/04**

(73) Proprietor: **SMS group S.p.A.**
**33017 Tarcento (UD) (IT)**

(72) Inventors:
• **CAUDURO, Francesco**
**I-33017 Tarcento, UDINE (IT)**

• **DEL NEGRO, Giorgio**
**I-33017 Tarcento, UDINE (IT)**
• **PETRI, Luca**
**I-33017 Tarcento, UDINE (IT)**
• **NARDUZZI, Lorenzo**
**I-33017 Tarcento, UDINE (IT)**

(74) Representative: **Zanettin, Gianluigi et al**
**Jacobacci & Partners S.p.A.**
**Piazza Mario Saggin, 2**
**35131 Padova (IT)**

(56) References cited:
CA-A1- 3 109 332    GB-A- 2 221 227
US-A1- 2022 185 638    US-B2- 7 370 823

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

# Description

## Field of application

The present invention relates to a system and method for winding rolled products in the field of the steel industry.

In particular, the present invention allows controlling, regulating and commanding the hot or cold winding of semi-finished metal products coming from steel mills, such as wire rod, wire, tubular elements or the like, used, for example, in the production of metal structures, e.g., to obtain reinforced concrete or other types of structures.

## Background art

Winding systems suitable for making coils of hot or cold semi-finished metal products coming from, for example, steel mills, or secondary processing products, such as wire rod, wire, tubular elements, squares or the like, are known. The various types of metal products will all be generally referred to as rods in the following description.

It is known that for some applications the rod has a non-uniform surface conformation, characterized by the presence of edges or corrugations which change its cross section. This affects the winding in the coil.

The rod is often wound when it is still hot or very hot. This affects the section with which the rod is wound and thus the winding in the coil.

Generally, the winding systems comprise:

- a rotating coiler about which the turns of the coil are formed and
- a movable distributor, which operates in coordination with the rotating coiler to guide the positioning of the rod along the height of the coil.

The coiler normally comprises a spindle associated with retaining elements which define the width of the coil, at least one of which is removable for extracting the coil.

The rotating coiler can be arranged with its rotation axis either vertically or horizontally. In both cases, the distributor is positioned to the side of the rotating coiler.

In use, the distributor is moved as a shuttle between the two axial ends of the coiler. Such a movement occurs in a plane parallel to the rotation axis of the coiler. Such a plane may pass through the axis of the coiler or be kept tangent to the cylindrical surface of varying diameter of the coil in formation.

It is the basic objective of the winding process to wind the rod so that the coiler is filled as evenly as possible, avoiding overlaps and/or gaps between the turns of the coil.

As mentioned above, the winding is certainly affected by the cross-section of the rod and its variability. Therefore, it is not enough to know the nominal values of the rod section to obtain sufficiently precise control of the coil formation to optimize the filling speed and avoid overlaps and/or gaps between adjacent turns.

During winding, the winding systems of the conventional type cannot optimally coordinate the functionality of either the coiler or the distributor so that the turns are positioned in the desired manner, relative to the optimization parameters above, according to the cross section and characteristics of the rod.

The incorrect arrangement of the turns during winding generates imperfections in the resulting coil, e.g., such as gaps and/or overlaps, partial or total, of the turns. The coils obtained from known systems, due to their imperfections, may therefore have a low coil density coefficient, defined as the ratio of the effective volume of the coils to the total overall footprint of the coil.

These imperfections could often be reflected in the efficiency of production processes which are fed by coils thus obtained.

To improve the quality of the coils, some control and regulation devices have been suggested which can measure some parameters, including the rod distribution speed, and can use the information gathered to control and manage winding. However, these known devices are unreliable in measuring parameters, which is done indirectly. This means that the consequent adjustment of the rotation speed of the coiler, and/or of the displacement speed and/or of the distributor positioning is/are also inaccurate. Furthermore, these known devices are not only unable to detect the cross-section of the rod, but must also be constantly coordinated with the distributor and must be replaced and/or adjusted from time to time according to the cross-section of the rod.

To overcome the aforesaid limitations, a device and a winding management method based on the direct detection of some winding parameters of the rod on the coil was proposed as described in EP3362390B1. Document CA 3 109 332 A1 also shows a system and a method for winding a rolled product, and forms the basis for the preamble of claim 1.

More in detail, with reference to figures 1 and 2 taken from EP3362390B1, such a management device is intended to cooperate with a winding apparatus, which is provided with: a distributor B having a feed outlet C of hot or cold semi-finished metal products; and a spool D. Distributor and spool are respectively moved by appropriate controlled movement and rotation means.

The management device comprises:

- a video recording system E configured to acquire images of said semi-finished metal product;
- a processing and calculation unit F configured to process said images and continuously calculate the equivalent diameter of said semi-finished metal product and the inclination angle defined between the axis of the feed outlet C and the instantaneous winding point of said semi-finished metal product on said spool D;

- a control and command unit G configured to control said operating parameters obtained with previously provided reference operating parameters, and to control said movement and rotation means of said distributor B and said spool D in a coordinated manner.

The management method comprises the following operating steps:

- a step of data input of the winding reference operating parameters (desired inclination angle and the equivalent diameter of said semi-finished metal product at the i-th rotation of said spool D and the 1-th layer of the coil in formation) into the control and command unit G;
- a step of image collecting by the video recording system during winding, the image collection being coordinated with winding speed,
- a step of image processing and continuous calculating of at least the operating parameters (inclination angle and equivalent diameter of said semi-finished metal product) by means of the processing and calculation unit F,
- a step of comparing the operating parameters obtained by image collection with said reference operating parameters entered into said control and command unit G;
- a step of converting of any differences between the reference operating parameters and said obtained operating parameters into coordinated changes in the movement speed of said distributor and/or the rotation speed of the spool.

The management method of a winder described in EP3362390B1, while allowing for a marked improvement in spool quality, is not easy to implement because the step of detecting of the control parameters must be performed on the semi-finished product at the instantaneous point of winding of the metal semi-finished product onto the spool D, a position in which the semi-finished product is more affected by vibrations than when it is wound on the spool. Therefore, the detection of the inclination angle is affected by vibratory phenomena induced by the rotation of the winder and the feeding motion of the semi-finished product. To avoid loosing accuracy, such a step of detecting must be conducted in a particularly accurate manner. This complicates the management method.

Thus, the need is felt for a winding system and management method which continues to ensure the correct winding of a coil, but which can be implemented in a simpler, more reliable manner.

Overview of the invention

Therefore, it is the object of the present invention to eliminate all or part of the drawbacks of the aforesaid problems of the prior art by providing a rolled product winding system and method in the field of the steel industry which allows obtaining a coil wound correctly in a simple, reliable manner.

It is a further object of the present invention to provide a system and method for winding rolled products in the field of the steel industry that is easy to make or implement.

Brief description of the drawings

The technical features of the invention according to the aforesaid objects may be clearly found in the contents of the claims hereinbelow and the advantages thereof will become more apparent from the following detailed description, given with reference to the accompanying drawings which show one or more embodiments merely given by way of non-limiting example, in which:

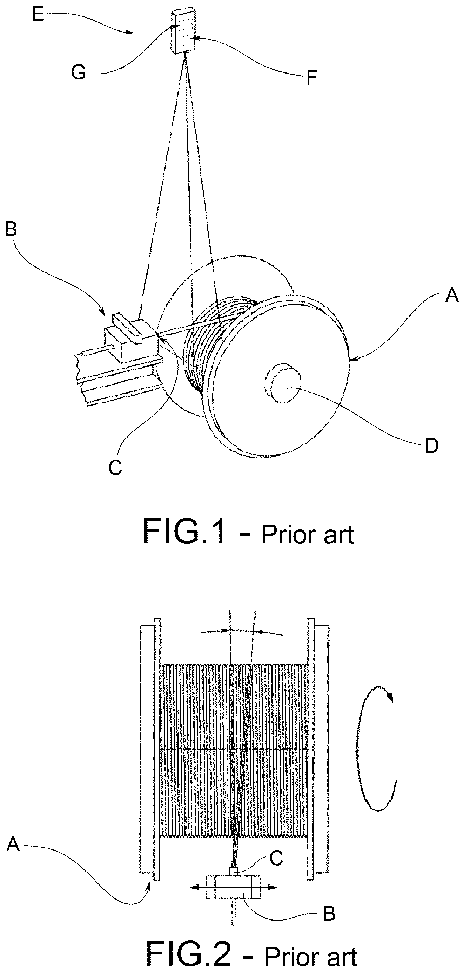

- figure 1 shows a perspective view of a winding management device as described in EP3362390B1;
- figure 2 shows a top view of figure 1 which shows the field of view of the management device;
- figure 3 shows a top plan view of a winding system according to an embodiment of the invention;

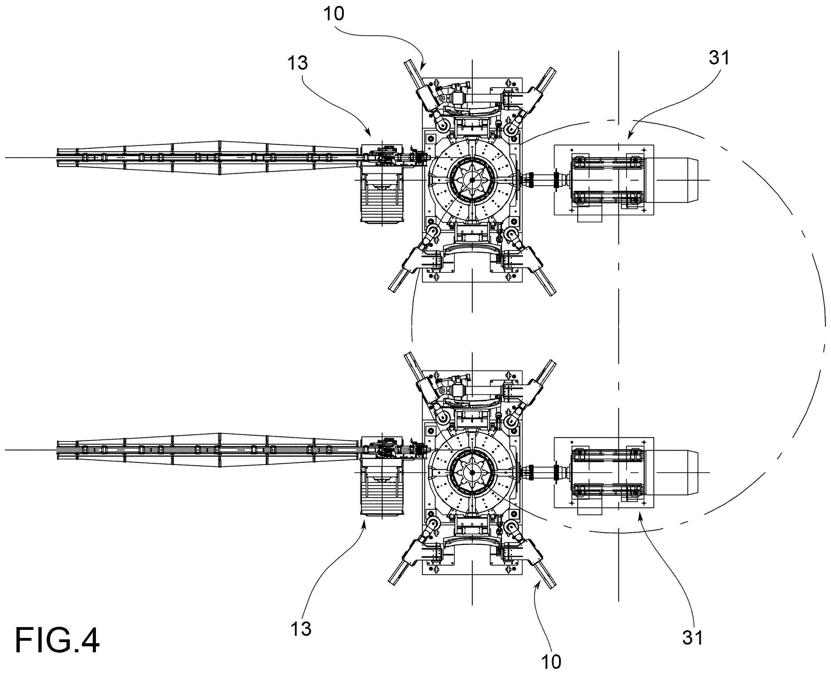

- figure 4 shows an enlarged detail of figure 3;
- figure 5 shows a perspective view of part of the winding system shown in figure 3, relating to a winder with some parts removed to better illustrate others;
- figure 6 shows a top-down orthogonal view of part of the winding system shown in figure 3, related to a winder;
- figures 7 and 8 are two orthogonal side section views, diagrammatically showing two different steps of forming of a coil in the spool of the winder in figure 6;
- figures 9 and 10 are two orthogonal side section views, diagrammatically showing a coil in formation in the spool of the winder in figure 6 with spatial coordinates graphically indicated referring to the scanning window of a laser profilometer;
- figure 11 shows a graph related to the growth trend over time of some layers of the coil in formation, achievable with the coiling system according to the invention;
- figures 12 and 13 are two orthogonal side section views, diagrammatically showing a coil in formation in the spool of the winder in figure 6 in two different operating situations in the formation of a layer with respect to theoretical reference conditions.

Detailed description

With reference to the accompanying drawings, a rolled product winding system in the field of the steel industry according to the invention is indicated by reference numeral 1 as a whole.

For the sake of simplicity of presentation, the winding method according to the invention will be described later than the winding system, referring to the latter.

Hereinafter and in the following description and claims, reference will be made to the winding system 1 in a condition of use. Any references to a lower or upper position, or to a horizontal or vertical orientation, must thus be understood in this sense.

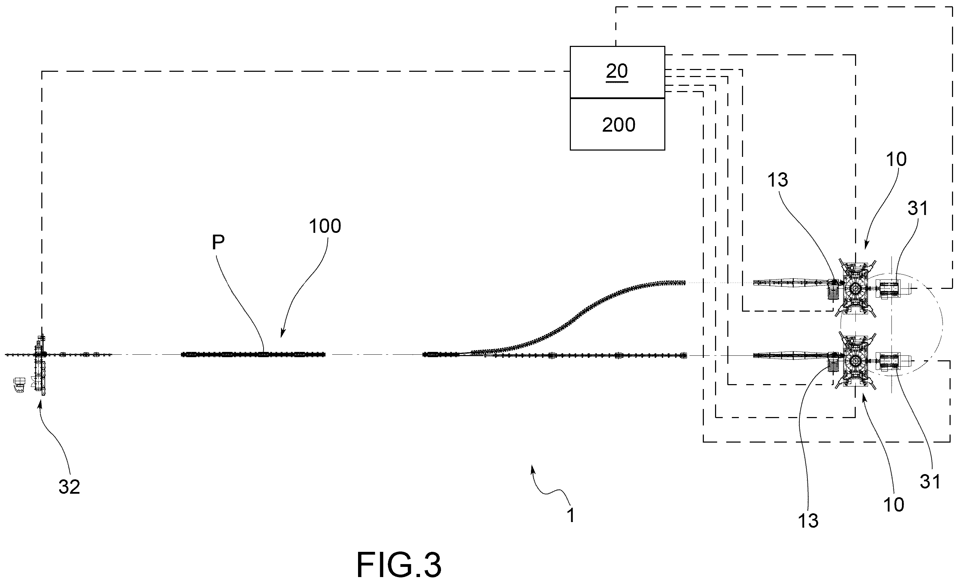

As shown in figure 3, the winding system 1 is intended to be installed in a rolling line 100 suitable to produce a rolled product. More in detail, the system 1 is placed at the end of such a line 100.

As shown in figure 3, the end of the rolling line 100 can be bifurcated into two or more branches, each of which can be provided with a winding system 1 according to the invention.

According to a general embodiment of the invention, the winding system 1 of a rolled product comprises a winder 10.

The winder 10 is itself known to a person skilled in the field and will not be described in detail, except to point out that winder 10 itself comprises:

-    a winding spool 11;
-    spool rotation means 12 suitable to rotate the spool 11 around a rotation axis Y at a spool rotation means Vr.

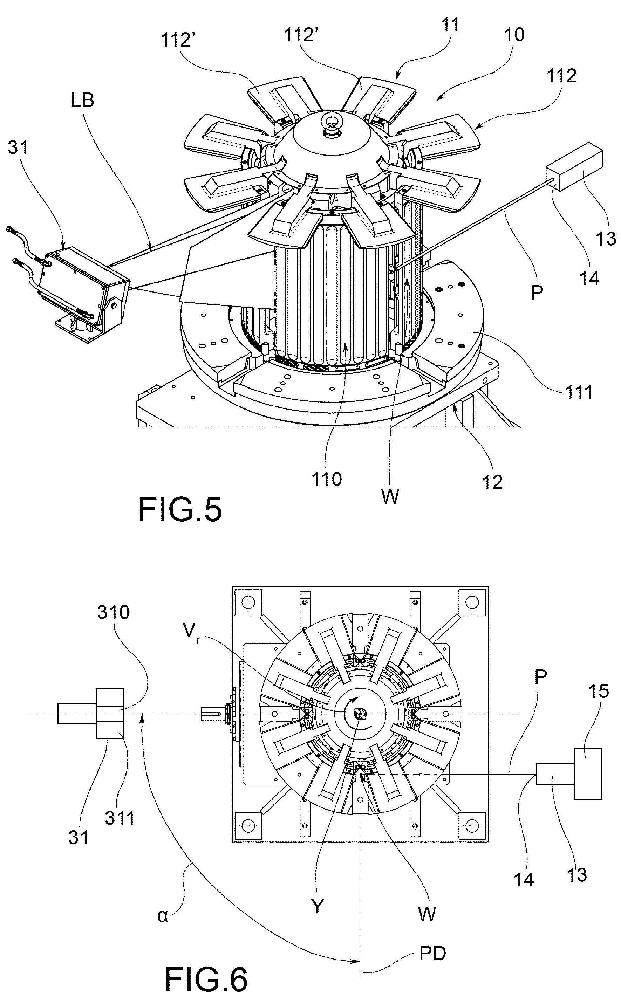

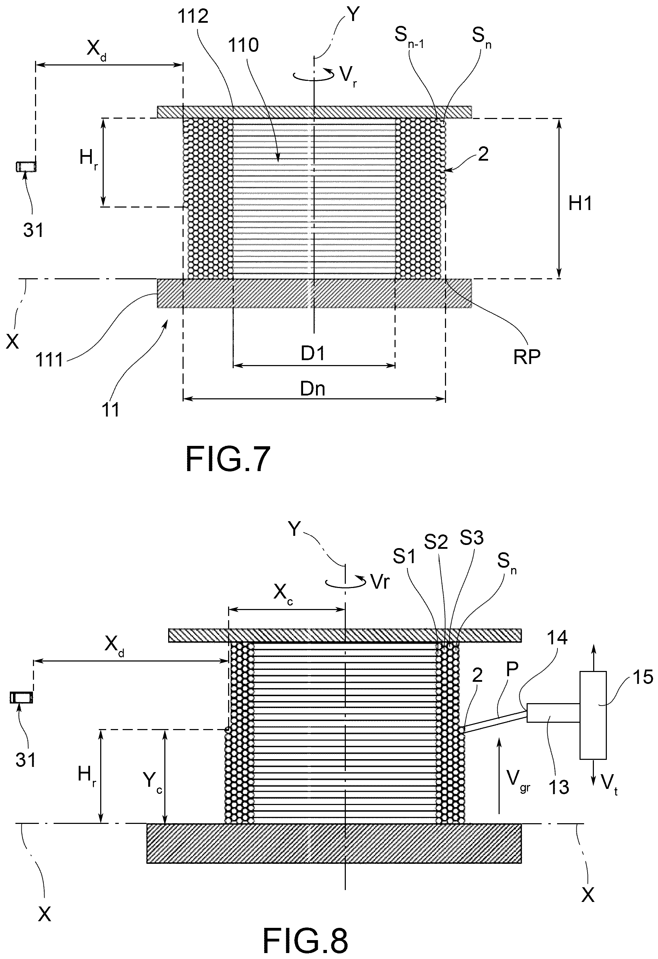

In more detail, as diagrammatically shown, for example, in figures 7 and 8, the spool 11 comprises a spindle 110, which extends coaxially to the rotation axis Y and around which the rolled product P is progressively wound forming a multilayer winding coil 2 S1, S2, S3, ... Sn. The rotation axis Y of the spool 11 can be vertical or horizontal. The spindle 110 has a diameter D1, which defines the inside diameter of the coil 2, and a height H1, which defines the height of the coil 2. Preferably, the spool 11 is provided with two axial restraining elements 111 and 112, located at opposite axial ends of the spindle 110. Advantageously, as shown in figure 5, one of the two axial restraining elements (preferably the upper one 112 in the case of a vertical-axis spool) is removable, as it consists of movable flaps 112'.

The winder 10 further comprises:

-    a distributor 13, which is suitable to guide the positioning of the rolled product P on the spool 11 at an instantaneous winding point W and is provided with a product feed outlet 14;
-    distributor translation means 15 suitable to move the distributor 13 with respect to the spool 11 so that the product feed outlet 14 performs an alternating translational movement of the spool parallel to the rotation axis Y so as to distribute the rolled product on the spool and vary over time the instantaneous winding point of the rolled product on the spool and on the coil in formation parallel to axis Y.

As shown in figure 6, instantaneous winding point W means the first contact point of a portion of the rolled product on the spool or surface of the coil in formation. In other words, it is the point in which the rolled product becomes tangent to the spool or surface of the coil in formation.

The spooling system 1 of a rolled product further comprises a control and command unit 20 which is configured to control the rotation means 12 and the translation means 15 in a coordinated manner according to a predetermined spooling programme, which is as a function of:

-    predetermined operating reference parameters storable by said control and command unit 20 and
-    operating parameters, which can be acquired in real time while winding by the control and command unit 20 through the detection means 31, 32 with which the winding system 1 is equipped.

According to the invention, said detection means comprise at least one laser triangulation profilometer 31 which:

-    is arranged substantially diametrically opposite to the distributor 13 relative to the spool 11 and
-    is suitable for continuously detecting the surface profile of the rolled product coil at every turn added along the height development of the coil in formation.

The expression "arranged substantially diametrically opposite to the distributor 13 relative to the spool 11" means any position in the half-plane opposite to the one in which the distributor is located, the two half-planes being identified by the diametrical plane PD passing through the instantaneous winding point W and the rotation axis Y of the spool.

As shown in figure 6, the profilometer 31 is oriented with respect to said spool 11 so as to scan the surface of the coil in a position angularly displaced around the rotation axis Y with respect to said instantaneous winding point W of the rolled product.

By virtue of the invention, the profile of the surface of the coil in formation is detected at a given diametral section instead of detecting the winding angle on the spool.

Furthermore, the detection may not be carried out at the instantaneous winding point W (a zone in which the rolled product P is subject to vibration), but instead may be carried out at another portion of the coil downstream of such a point W, a zone in which the rolled product is much less subject to vibration because it is already stably wound on the spool.

By virtue of the system 1 according to the invention, the winding can be implemented and managed more easily and reliably.

Preferably, the orientation position of said profilometer 31 with respect to said spool for scanning the coil surface is angularly displaced around the rotation axis Y by an angle comprised between 75° and 105° with respect to said instantaneous winding point of the rolled product. More preferably, said angle $\alpha$ is about 90° (as shown in figure 6).

The laser triangulation profilometer 31, as well as its principle of operation, are known to a person skilled in the art and will not be described in more detail except to point out that the profilometer 31 comprises:

- a laser emitter 310 suitable for emitting a laser beam; and
- a sensor 311 suitable for detecting the reflected light generated by said laser beam.

Operatively, the laser beam emitted by the emitter 310 illuminates the target (the surface of the coil). The light reflected from the surface is detected by the sensor, creating a profile of the illuminated surface.

Preferably, as shown in figure 5, the profilometer 31 emits a laser beam LB which illuminates the entire height H1 of the spool and thus of the coil in formation. Advantageously, if the height of the spool cannot be illuminated in its entirety by a single laser beam, two or more laser profilometers can be provided. In this case, the height of the spool is divided into several parts, each of which is covered by a laser profilometer.

Advantageously, said at least one 31 laser triangulation profilometer is suitable for detecting for each turn:

- the distance Xd which separates it from the turn itself in a plane orthogonal to the rotation axis Y of the spool, and
- the position in height Yc along such a rotation axis Y relative to a reference plane RP, orthogonal to the rotation axis Y and located at one of the two axial ends of the spool.

Operatively, having noted said distance Xd of a turn belonging to the n-th layer of the coil and known the diameter of the (n-1)-th layer (calculated earlier, the diameter of the spindle of the coil, the number of layers already formed and the diameter - nominal or real - of the rolled product) being known, it is immediate to calculate the radial distance Xc of the turn from the rotation axis Y of the spool, thus calculating the diameter Dn of the n-th layer. Advantageously, such a calculation can be carried out by a processing and calculation 200 unit (with which the system 1 is provided, which will be described later and which is preferably integrated into the command and control unit 20), or be carried out by a PLC installed directly aboard the profilometer.

By means of the laser profilometer 31, it is thus possible to determine the spatial coordinates Xc and Yc of each turn in a coordinate system having the rotation axis Y as its y-axis and the diametrical axis of the spool lying on the reference plane RP and passing through the zone of the spool/coil scanned by the profilometer 31 as its x-axis.

According to an alternative embodiment of the invention, the profilometer can be used to detect the profile of the surface of the wound coil for the purpose of detecting, as an alternative to or in addition to the position of the turns, winding imperfections, substantially consisting of any empty gaps between the coils.

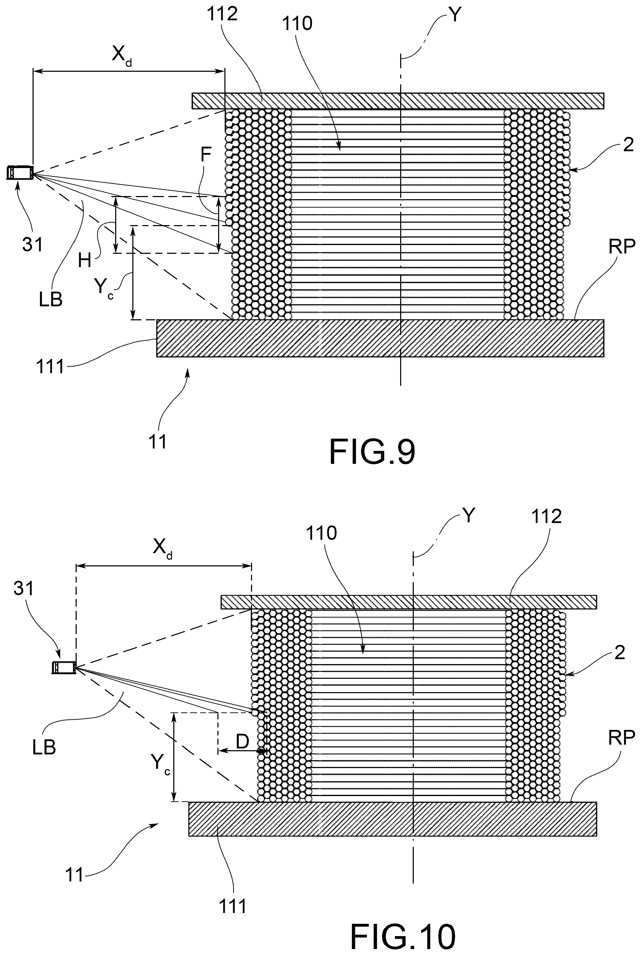

Advantageously, as shown in figures 9 and 10, said at least one laser triangulation profilometer 31 can be electronically operated so as to scan inside a scanning window F having a height H less than the height H1 of the spool 11 along the rotation axis Y.

Operatively, such a scanning window F is generated by operating at the software level on the sensor, limiting the reading of the sensor to a given reading height H.

Preferably, on software level, the method operates on the sensor 311 of the profilometer 31 by limiting the reading of the sensor itself in the window F also to a given reading depth D, intended in the radial direction.

More in detail, such a scanning window F is moved by software along the height H1 of the spool parallel to the rotation axis Y so that the scanning window can follow the coil being forming at every added turn; the sensor 311 remains fixed. In this manner, vibrations on the profilometer 31 and mechanical complications in moving it are avoided.

Operatively, by virtue of such an expedient, it is possible to focus the scan at the growth zone of the coil, avoiding possible interference deriving from light reflected from other parts of the coil or from defects present on the coil itself.

Preferably, said at least one laser triangulation profilometer 31 is configured to update the position of the scanning window with a delay comprised between 10 and 50 ms.

Preferably, said at least one laser triangulation profilometer 31 has a minimum scanning frequency of 300 Hz.

According to the invention, the winding system 1 further comprises a processing and calculation unit 200 which is configured to adjust in feedback - on the basis of the surface profile of the coil of rolled product detected by the profilometer 31 at every added turn - the translation speed Vt of the distributor 13 so as to minimize the difference between an actual operating parameter calculated on the basis of the profile of the coil in formation detected by said profilometer 31 and the same operating parameter calculated on the basis of theoretical data related to a predetermined ideal winding of the coil.

The rolled products winding system 1 according to the invention thus allows achieving the correct winding of a coil easily and reliably.

Furthermore, the rolled product winding system 1 according to the invention is easy to make or implement.

According to the invention, said actual operating parameter, calculated on the basis of the profile of the coil in formation detected by said profilometer 31 at every added turn, is

the actual height Hr of the n-th layer of the coil in formation at every further added turn with respect to one of the two opposite axial ends of the spool.

Alternatively, according to a way not included in the invention, said actual operating parameter may be the actual growth rate Vgr of each n-th layer at every further added turn.

More in detail, as shown in figures 7 and 8, the actual height Hr of the n-th layer of the coil in formation at each further added turn corresponds to the position in height Yc of the last added turn.

The real growth rate Vgr of each n-th layer at every further added turn is defined as the linear speed with which the height H1/Yc of the n-th layer grows parallel to the rotation axis Y.

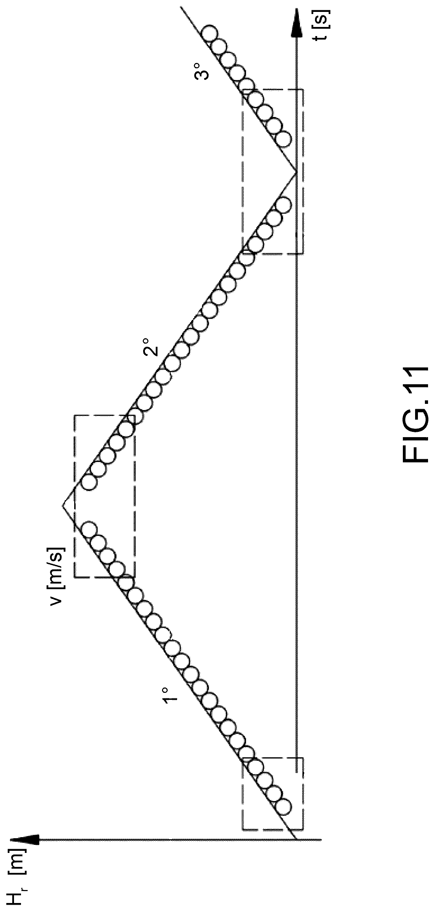

Figure 11 shows a graph illustrating the height position of each turn of an n-th layer over time; in such an example, the trend is linear; the growth rate is defined by the angular coefficient m of the line. The processing and calculation unit 200 calculates the real growth rate Vgr by relating the position Yc of each turn over time, consequently generating graphs as shown in figure 11.

The real growth rate Vgr of each n-th layer changes direction according to the direction of growth of the layer (upward or downward).

According to a preferred embodiment of the invention, said predetermined winding programme is aimed at feedback adjusting the translation speed Vt of the distributor so that the actual height Hr is substantially equivalent to the theoretical height Ht of the n-th layer of the coil in formation at every further added turn.

In an ideally wound coil, the turns are in contact with each other; therefore, there are no spaces between the turns. The theoretical height Ht of the n-th layer (and in general of the coil) can then be calculated as the sum of the diameters of the plurality of wound turns; in this operation, reference must be made to the diameters of the turns along a same line parallel to the rotation axis Y. Operatively, the theoretical height Ht can thus be calculated based on the rolled product diameter values previously made available to the processing and calculation unit 200, as a function of the spool height.

In general, the rolled material P has a variable cross-section area because it is subject to small diameter variations dictated by the rolling process placed upstream (wear, etc.). Therefore, the diameter of the rolled material is not constant. Such a variability affects the formation of the coil.

As will be discussed later, in calculating the theoretical height Ht can be simplified by assuming, however, that the diameter of the rolled material P is constant and is equal to the nominal diameter.

Alternatively, to ensure greater accuracy in calculating the theoretical height, the diameter of the rolled product which is progressively fed to the winding system 1 can be measured in real time.

According to a further preferred embodiment of the invention, said predetermined winding programme is aimed at feedback adjusting the translation speed Vt of the distributor so that the travel speed of the distributor is substantially equivalent to the actual growth rate Vgr of each n-th layer at every further added coil to prevent the distributor 13 from being ahead and/or behind the coil in formation thus avoiding producing defects on the coil.

According to a preferred embodiment of the present invention, the aforesaid detection means further comprise an online meter 32 of the diameter of the rolled product.

More in detail, as shown in figure 3, the meter 32 is suitable to continuously measure the diameter of the rolled product D and is placed upstream of the distributor 13 along the feed line 100 of the rolled product P. The processing and calculation unit 200 is configured to use the measurements of the diameter of the rolled product made by the meter 32 as values of the diameter of the rolled product.

Advantageously, said processing and calculation unit 200 is configured to correlate the respective detection time to each diameter measurement. Thus, knowing the linear feed rate of the rolled product, it is possible to correlate each diameter measurement to a specific portion of the rolled product.

According to such a preferred embodiment, the aforesaid predetermined reference operating parameters storable by said control and command unit 20 consist of:

- linear speed VP of the rolled product along the feed line of the rolled product itself;
- spool diameter D1;
- spool height H1.

Operatively, having the above three predetermined operating parameters as inputs, as well as the rolled product diameter values acquired in real time, the processing and calculation unit 200 can calculate the rotational speed Vr of the spool 11 and the translation speed Vt of the distributor 13, as will be described in detail below.

According to an alternative embodiment of the present invention, an online meter 32 of the diameter of the rolled product may not be provided. In this case, the processing and calculation unit 200 is configured to use preset values, storable by said control and command unit 20 as values of the diameter of the rolled product.

According to such an alternative embodiment, the aforesaid predetermined reference operating parameters storable by said control and command unit 20 comprise at least:

- linear speed of the rolled product VP along the feed line of the rolled product itself;
- spool diameter D1;
- spool height H1; and
- nominal diameter of the rolled product $\phi$P.

Operatively, having the aforesaid four predetermined operating parameters as inputs, the processing and calculation unit 200 can calculate the rotational speed Vr of the spool 11 and the translation speed Vt of the distributor 13, as will be described in detail below.

Preferably, for every n-th layer of the coil in formation the processing and calculation unit 200 is configured to initialize the translation speed Vt of the distributor at a theoretical translation speed Vtt, which is calculated as a function of:

- formation time of a turn Tfs in said n-th layer;
- number of turns Ns in said n-th layer.

More in detail, the theoretical translation speed Vtt is calculated by dividing the height H1 of the coil by the formation time Tfl of a layer according to the formula: Vtt = H1/Tfl.

In turn, the formation time Tfl of a layer is calculated by relating the formation time of a turn Tfs to the n-th diameter and the number of turns Ns which can be accommodated on a coil layer according to the formula:

$$Tfl = Tfs*Ns$$

To calculate the number of coils Ns which lie within the coil height H1, it is necessary to know the diameter $\phi$P of the rolled product (nominal or real) and the coil height H1; this is calculated according to the following formula: Ns = H1 / $\phi$P.

To calculate the formation time of a turn Tfs at the n-th diameter, it is necessary to know the value of the circumference Cn = Dn*$\pi$ on which the product is winding (where Dn indicates the diameter of the n-th layer) and use the input value of the product line speed VP according to the following formula: Tfs = Cn / VP.

In turn, if preset nominal value is used for the diameter $\phi$P of the rolled product, the diameter of the n-th layer Dn is calculated as Dn= D1 + 2*$\phi$P*Nln, where Nln indicates the n-th number of layers already formed including the n-th layer.

If real values are used for the diameter $\phi$P of the rolled product, the diameter of the n-th layer Dn is calculated as Dn= D1 + $\Sigma$[(2* $\phi$P1) + ... + (2* $\phi$Pn)].

An example of calculation is given, assuming the following values for the four reference parameters: VP= 35 m/s; D1=900mm; H1=900mm; $\phi$P=10mm (nominal value). The calculation is referred to an n-th layer of the coil in formation.

The method begins by calculating the theoretical translation speed Vtt: Vtt = H1/Tfl.

It is assumed that Tfl = Tfs*Ns, where:

$$Ns = H1 / \phi P.$$

Tfs = Cn / VP and Cn = Dn*$\pi$, where Dn= D1 + 2*$\phi$P*Nln.

Assuming that Nln = 2, it results Dn=900 + 2*10*2=940mm and thus Cn=940* $\pi$=2953mm. It follows that:

$$Tfs=Cn/Vp=2.953/35=0.084s$$

Ns=900/10=90

$$Tfl= Tfs*Ns=0.084*90=7.56s$$

In conclusion, the theoretical translation speed of the distributor at the n-th layer Vtt = H1/Tfl=900/7.56=119mm/s.

After initializing the translation speed Vt with the value Vtt, the translation speed of the distributor Vt is feedback adjusted according to two options.

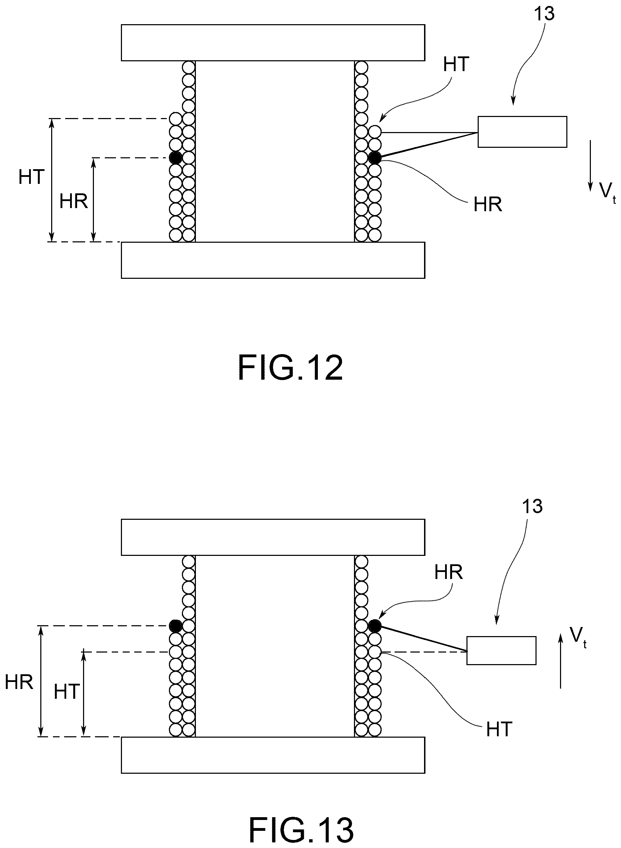

Option 1: adjusting Vt so that the actual height Hr is substantially equivalent to the theoretical height Ht of the n-th layer of the coil in formation at every further added turn. As shown in figures 12 and 13, the adjustment criterion is as follows:

if Hr is less than Ht, Vt must be decreased;
if Hr is greater than Ht, Vt must be increased.

Operatively, to ensure proper coil formation, the rolled product must be wound on the spool with an orientation substantially orthogonal to the rotation axis Y of the spool, within a predetermined tolerance. Such a condition occurs when the product supply output 14 of the distributor 13 is aligned with the instantaneous winding point W. Such a condition is verified if Hr substantially coincides with Ht.

More in detail, if in the condition in which the actual height Hr is less than the theoretical height Ht (as shown in figure 12), the distributor 13 has gone over the instantaneous winding point W; therefore, the speed of the distributor must be decreased so that the rolled product is positioned parallel to the distributor outlet again (not considering factors K).

If in the condition in which the actual height Hr is greater than the theoretical height Ht (as shown in figure 13), the distributor 13 is retracted from the instantaneous winding point W; therefore, the speed of the distributor must be increased so that the rolled product is positioned parallel to the distributor outlet again (not considering factors K).

Option 2: adjusting the translation speed of the distributor is substantially equivalent to the actual growth rate Vgr of each n-th layer at every further added turn.

Advantageously, some calculation parameters can be modified by introducing corrective factors K, which allow the coil winding characteristics to be varied to specific requirements. In particular, the number of turns which stay within the coil height can be changed with corrective parameters K.

Advantageously, the translation speed Vt of the distributor can also be changed with corrective parameters K from the theoretical one to achieve specific coil winding effects by keeping the distributor further retracted from the last wound turn.

Advantageously, for every n-th layer of the coil in formation the processing and calculation unit 200 is configured to adjust the rotation speed Vr of the spool as a function of:

- linear speed VP of the rolled product along the feed line of the rolled product itself;
- diameter of the spool D1 or of the n-1-th layer Dn of the coil in formation.

In more detail, the rotational speed of the spool Vr is calculated by the formula $Vr=(60*VPa)/(2*\pi)$, where VPa is the angular speed of the product at a given n-th diameter expressed in rad/s and is calculated as $VPa = VP (Dn/2)$, while VP is the speed (tangential/linear) of the rolled product.

An example calculation is given, assuming the following values for VP and DN: VP= 35 m/s; Dn=940mm (assuming Nln = 2). So VPa = 35 / (0.940/2)= 74.46 rad/s. Therefore, $Vr=(60*VPa)/(2*\pi)= (60*74,96)/(2*\pi)= 711$ rpm.

The rolled product winding method of a winding system 1 according to the invention will now be described.

The description made in relation to system 1 applies to the winding method that will now be described below.

The method according to the invention comprises the following operating steps:

a) continuously detecting the surface profile of the coil of rolled product at every added turn by means of said profilometer 31 oriented with respect to said spool so as to scan the coil surface in a position angularly displaced around the rotation axis Y with respect to said instantaneous winding point of the rolled product,

b) feedback adjusting the translation speed of the distributor Vt at every added turn so as to minimize the difference between an actual operating parameter calculated on the basis of the profile of the coil in formation detected by said profilometer 31 and the same operating parameter calculated on the basis of theoretical data related to a predetermined ideal winding of the coil.

According to the invention, said actual operating parameter, calculated on the basis of the profile of the coil in formation detected by said profilometer 31 at every added turn, is

the actual height Hr of the n-th layer of the coil in formation at every further added turn with respect to one of the two opposite axial ends of the spool.

Alternatively, according to a way not included in the invention, said actual operating parameter may be the actual growth rate Vgr of each n-th layer at every further turn added.

Advantageously, the translation speed Vt of the distributor can be feedback adjusted so that the actual height Hr is substantially equivalent to the theoretical height Ht of the n-th layer of the coil in formation at every additional turn added. The theoretical height Ht is calculated based on the rolled product diameter values previously made available to the processing and calculation unit 200, as a function of spool height.

Alternatively, the travel speed Vt of the distributor can be feedback adjusted so that the translation speed of the distributor Vt is substantially equivalent to the real growth rate Vgr of each n-th layer at every further added turn.

Advantageously, said laser triangulation profilometer 31 detects for each turn the radial distance from the rotation axis Y of the spool and the height position along such a rotation axis Y.

The value of rolled product diameter $\phi P$ can be obtained from continuous measurements on the rolled product P by an online meter 32 placed upstream of the distributor 13 along the rolled product feed line. Each diameter measurement is related to its respective detection time.

In this case, preferably, the feedback adjustment of the translation speed Vt of the distributor uses predetermined reference operating parameters stored by said control and command unit 20 which consist of:

- linear speed of the rolled product along the feed line of the rolled product itself;
- spool diameter;
- spool height.

Alternatively, the value of the diameter of the rolled product $\phi P$ is a preset nominal value.

In this case, preferably, the feedback adjustment of the translation speed Vt of the distributor uses predetermined reference operating parameters storable by said control and command unit 20 which consist of:

- linear speed of the rolled product along the feed line of the rolled product itself;
- spool diameter;
- spool height; and
- diameter of the rolled product.

Advantageously, for every n-th layer of the coil in formation the translation speed Vt of the distributor is initialized at a theoretical translation speed, which is calculated as a function of:

- winding time of a turn in said n-th layer;
- number of turns in said n-th layer.

Advantageously, for every n-th layer of the coil in formation the rotation speed of the spool is adjusted as a function of:

- linear speed of the rolled product along the feed line of the rolled product itself;
- diameter of the spool or diameter of the n-1-th layer of the coil in formation.

The advantages offered by the invention previously highlighted in describing the winding system 1 also apply to the winding method and will not be repeated here for the sake of brevity of presentation.

The invention provides numerous advantages, some of which have already been described.

The rolled products winding system 1 according to the invention thus allows achieving the correct winding of a coil easily and reliably.

Furthermore, the rolled product winding system 1 according to the invention is easy to make or implement.

Therefore, the invention thus devised achieves the set objects.

Obviously, in practice, it may also take shapes and configurations different from the one disclosed above, without departing from the scope of the appended claims.

**Claims**

1. A winding system (1) of a rolled product (P) comprising:

    - a winder (10) in turn comprising:

        - a winding spool (11) and
        - spool rotation means (12) suitable to rotate the spool (11) around a rotation axis (Y),
        - a distributor (13) which is suitable to guide the positioning of the rolled product towards the spool at an instantaneous winding point and is provided with a product feed outlet (14);
        - distributor translation means (15) suitable to move the distributor (13) with respect to the spool (11) so that the product feed outlet (14) performs an alternating translational movement of the spool parallel to the rotation axis (Y) so as to distribute the rolled product on the spool and vary over time the instantaneous winding point of the rolled product on the spool and on the coil in formation,

- a control and command unit (20) which is configured to control the rotation means (12) and the translation means (15) in a coordinated manner, in accordance with a predefined winding program which is a function of predefined reference operating parameters storable by said control and command unit (20) and of operating parameters which can be acquired in real time during the winding by the control and command unit (20) by detection means (30) with which the winding system (1) is provided,

    wherein said detection means (30) comprise at least one laser triangulation profilometer (31) which is substantially arranged in a position diametrically opposite to the distributor (13) with respect to the spool (11) and is suitable to continuously detect the surface profile of the coil of rolled product at every added turn, wherein said profilometer (31) is oriented with respect to said spool so as to scan the coil surface in a position angularly displaced around the rotation axis (Y) with respect to said instantaneous winding point of the rolled product,
    and wherein said winding system further comprises a processing and calculation unit (200) which, on the basis of the surface profile of the coil of rolled product detected by the profilometer (32) at every added turn, is configured to feedback adjust the translation speed of the distributor so as to minimize the difference between an actual operating parameter calculated on the basis of the profile of the coil in formation detected by said profilometer (31) and the same operating parameter calculated on the basis of theoretical data related to a predefined ideal winding of the coil
    **characterized in that**
    said actual operating parameter, calculated on the basis of the profile of the coil in formation detected by said profilometer (31) at every added turn, is the actual height (Hr) of the n-th layer of the coil in formation at every further turn added with respect to one of the two opposite axial ends of the spool,
    wherein said predefined winding programme is aimed at feedback adjusting the translation speed of the distributor so that the actual height (Hr) is substantially equivalent to the theoretical height (Ht) of the n-th layer of the coil in formation at every further turn added, said theoretical height (Ht) being calculated on the basis of the values of the diameter of the rolled product previously made available to the processing and calculation unit (200), as a function of the spool height.

2. A winding system according to claim 1, wherein the orientation position of said profilometer (31) with respect to said spool for scanning the coil surface is angularly displaced around the rotation axis (Y) by an angle comprised between 75° and 105° with respect to said instantaneous winding point of the rolled product.

3. A winding system according to any one of the preceding claims, wherein said at least one laser triangulation profilometer (31) is suitable to detect for each turn the radial distance from the rotation axis (Y) of the spool and the height position along such a rotation axis (Y).

4. A winding system according to any one of the preceding claims, wherein said at least one laser triangulation profilometer (31) can be electronically managed so as to scan inside a scanning window (F) having a height (H) lower than the height of the spool (11) along the rotation axis (Y), preferably said scanning window (F) being movable parallel to the rotation axis (Y) so as to follow the coil in formation at every added turn.

5. A winding system according to claim 4, wherein said at least one laser triangulation profilometer (31) is configured to update the position of the scanning window (F) with a delay comprised between 10 and 50 ms.

6. A winding system according to any one of the preceding claims, wherein said at least one laser triangulation profilometer (31) has a minimum scanning frequency of 300 Hz.

7. A winding system according to any one of the preceding claims, wherein said detection means (30) further comprise an online meter (32) of the diameter of the rolled product, said meter being suitable to continuously measure the diameter of the rolled product ($\phi$P) and being placed upstream of the distributor (13) along the feed line of the rolled product and wherein the processing and calculation unit (200) is configured to use the measurements of the diameter of the rolled product made by said meter (31) as values of the diameter of the rolled product.

8. A winding system according to claim 7, wherein said processing and calculation unit (200) is configured to correlate the respective detection time to each diameter measurement.

9. A winding system according to claim 7 or 8, wherein said predefined reference operating parameters storable by said control and command unit (20) consist of:

    - linear speed of the rolled product along the feed line of the rolled product itself;
    - spool diameter;
    - spool height.

10. A winding system according to any one of claims 1 to 6, wherein the processing and calculation unit (20) is configured to use preset values, storable by said control and command unit (20), as values of the diameter of the rolled product.

11. A winding system according to claim 10, wherein said predefined reference operating parameters storable by said control and command unit (20) comprise at least:

    - linear speed of the rolled product along the feed line of the rolled product itself;
    - spool diameter;
    - spool height; and
    - diameter of the rolled product.

12. A winding system according to any one of the preceding claims, wherein for every n-th layer of the coil in formation the processing and calculation unit (200) is configured to initialise the translation speed of the distributor at a theoretical translation speed, which is calculated as a function of:

    - winding time of a turn in said n-th layer;
    - number of turns in said n-th layer.

13. A winding system according to any one of the preceding claims, wherein for every n-th layer of the coil in formation the processing and calculation unit (200) is configured to adjust the rotation speed of the spool as a function of:

    - linear speed of the rolled product along the feed line of the rolled product itself;
    - diameter of the spool or of the n-1-th layer of the coil in formation.

14. A winding method (1) of a rolled product (P), wherein said product (P) is wound in a coil by means of a winding system (1) according to any one of the preceding claims, said method comprising the following operating steps:

    a) continuously detecting the surface profile of the coil of rolled product at every added turn by means of said profilometer (31) oriented with respect to said spool so as to scan the coil surface in a position angularly displaced around the rotation axis (Y) with respect to said instantaneous winding point of the rolled product,

**b)** feedback adjusting the translation speed of the distributor (Vt) at every added turn so as to minimise the difference between an actual operating parameter calculated on the basis of the profile of the coil in formation detected by said profilometer (31) and the same operating parameter calculated on the basis of theoretical data related to a predefined ideal winding of the coil

wherein said actual operating parameter, calculated on the basis of the profile of the coil in formation detected by said profilometer (31) at every added turn, is the actual height (Hr) of the n-th layer of the coil in formation at every further turn added with respect to one of the two opposite axial ends of the spool,

wherein the translation speed (Vt) of the distributor is feedback adjusted so that the actual height (Hr) is substantially equivalent to the theoretical height (Ht) of the n-th layer of the coil in formation at every further turn added, said theoretical height (Ht) being calculated on the basis of the values of the diameter of the rolled product previously made available to the processing and calculation unit (200), as a function of the spool height.

15. A winding method according to claim 14, wherein said at least one laser triangulation profilometer (31) detects for each turn the radial distance from the rotation axis (Y) of the spool and the height position along such a rotation axis (Y).

16. A winding method according to claim 14, wherein the value of the diameter of the rolled product ($\phi$P) is obtained from continuous measurements on the rolled product by means of an online meter (32) placed upstream of the distributor (13) along the feed line of the rolled product, wherein each diameter measurement is related to the respective detection time.

17. A winding method according to claim 16, wherein the feedback adjustment of the translation speed (Vt) of the distributor uses predefined reference operating parameters stored by said control and command unit (20), which consist of:

- linear speed of the rolled product along the feed line of the rolled product itself;
- spool diameter;

- spool height.

18. A winding method according to claim 14, wherein the value of the diameter of the rolled product ($\phi$P) is a preset nominal value.

19. A winding method according to claim 18, wherein the feedback adjustment of the translation speed (Vt) of the distributor uses predefined reference operating parameters stored by said control and command unit (20), which consist of:

- linear speed of the rolled product along the feed line of the rolled product itself;
- spool diameter;
- spool height; and
- diameter of the rolled product.

20. A winding method according to any one of claims 14 to 19, wherein for every n-th layer of the coil in formation the translation speed (Vt) of the distributor is initialised at a theoretical translation speed, which is calculated as a function of:

- winding time of a turn in said n-th layer;
- number of turns in said n-th layer.

21. A winding method according to any one of claims 14 to 20, wherein for every n-th layer of the coil in formation the rotation speed of the spool is adjusted as a function of:

- linear speed of the rolled product along the feed line of the rolled product itself;
- diameter of the spool or of the n-1-th layer of the coil in formation.

**Patentansprüche**

1. Wickelsystem (1) eines gewalzten Produktes (P)

umfassend:

- einen Wickler (10), der seinerseits umfasst:
- eine Wickelspule (11) und
- Spulenrotationsmittel (12), die geeignet sind, die Spule (11) um eine Rotationsachse (Y) zu drehen,
- einen Verteiler (13), der geeignet ist, die Positionierung des gewalzten Produktes zur Spule an einem momentanen Wickelpunkt zu führen und mit einem Produktzufuhr-Auslass (14) versehen ist;
- Verteiler-Translationsmittel (15), die geeignet sind, den Verteiler (13) relativ zur Spule (11) zu bewegen, so dass der Produktzufuhr-Auslass (14) eine alternierende Translationsbewegung der Spule parallel zur Rotationsachse (Y) ausführt, um das gewalzte Produkt auf der Spule zu verteilen und im Laufe der Zeit den momentanen Wickelpunkt des gewalzten Produktes auf der Spule und auf der sich bildenden Wicklung zu verändern,

- eine Steuer- und Befehlseinheit (20), die dazu konfiguriert ist, die Rotationsmittel (12) und die Translationsmittel (15) in koordinierter Weise gemäß einem vorbestimmten Wickelprogramm zu steuern, das eine Funktion vorbestimmter Referenzbetriebsparameter ist, die von der genannten Steuer- und Befehlseinheit (20) speicherbar sind, und von Betriebsparametern, die in Echtzeit während des Wickelns von der Steuer- und Befehlseinheit (20) mittels Detektionsmittel (30), mit denen das Wickelsystem (1) versehen ist, erfassbar sind,

wobei die genannten Detektionsmittel (30) wenigstens einen Lasertriangulations-Profilometer (31) umfassen, der im Wesentlichen in einer dem Verteiler (13) gegenüber der Spule (11) diametral entgegengesetzten Position angeordnet ist und geeignet ist, kontinuierlich das Oberflächenprofil der Wicklung des gewalzten Produktes bei jeder hinzugefügten Windung zu detektieren, wobei der genannte Profilometer (31) relativ zu der genannten Spule so orientiert ist, dass er die Wicklungsoberfläche in einer um die Rotationsachse (Y) winkelig versetzten Position relativ zu dem genannten momentanen Wickelpunkt des gewalzten Produktes abtastet, und wobei das genannte Wickelsystem ferner eine Verarbeitungs- und Berechnungseinheit (200) umfasst, die auf der Grundlage des von dem Profilometer (32) bei jeder hinzugefügten Windung detektierten Oberflächenprofils der Wicklung des gewalzten Produktes dazu konfiguriert ist, die Translationsgeschwindigkeit des Verteilers rückgekoppelt anzupassen, um die Differenz zwischen einem tatsächlichen Betriebsparameter, berechnet auf der Grundlage des von dem genannten Profilometer (31) detektierten Profils der sich bildenden Wicklung, und demselben Betriebsparameter, berechnet auf der Grundlage theoretischer Daten in Bezug auf eine vorbestimmte ideale Wicklung der Wicklung, zu minimieren **dadurch gekennzeichnet, dass** der genannte tatsächliche Betriebsparameter, berechnet auf der Grundlage des von dem genannten Profilometer (31) bei jeder hinzugefügten Windung detektierten Profils der sich bildenden Wicklung, die tatsächliche Höhe (Hr) der n-ten Schicht der sich bildenden Wicklung bei jeder weiteren hinzugefügten Windung relativ zu einem der zwei gegenüberliegenden axialen Enden der Spule ist,

wobei das genannte vorbestimmte Wickelprogramm darauf gerichtet ist, die Translationsgeschwindigkeit des Verteilers rückgekoppelt anzupassen, so dass die tatsächliche Höhe (Hr) im Wesentlichen der theoretischen Höhe (Ht) der n-ten Schicht der sich bildenden Wicklung bei jeder weiteren hinzugefügten Windung entspricht, wobei die genannte theoretische Höhe (Ht) auf der Grundlage der Werte des Durchmessers des gewalzten Produktes, die zuvor der Verarbeitungs- und Berechnungseinheit (200) zur Verfügung gestellt wurden, als Funktion der Spulenhöhe berechnet wird.

2. Wickelsystem nach Anspruch 1, wobei die Orientierungsposition des genannten Profilometers (31) relativ zu der genannten Spule zum Abtasten der Wicklungsoberfläche um die Rotationsachse (Y) um einen Winkel zwischen 75° und 105° relativ zu dem genannten momentanen Wickelpunkt des gewalzten Produktes winkelig versetzt ist.

3. Wickelsystem nach einem der vorhergehenden Ansprüche, wobei der genannte wenigstens eine Lasertriangulations-Profilometer (31) geeignet ist, für jede Windung den radialen Abstand von der Rotationsachse (Y) der Spule und die Höhenposition entlang einer solchen Rotationsachse (Y) zu detektieren.

4. Wickelsystem nach einem der vorhergehenden Ansprüche, wobei der genannte wenigstens eine Lasertriangulations-Profilometer (31) elektronisch so verwaltbar ist, dass er innerhalb eines Abtastfensters (F) mit einer Höhe (H) abtastet, die geringer als die Höhe der Spule (11) entlang der Rotationsachse (Y) ist, wobei das genannte Abtastfenster (F) vorzugsweise parallel zur Rotationsachse (Y) bewegbar ist, um der sich bildenden Wicklung bei jeder hinzugefügten Windung zu folgen.

5. Wickelsystem nach Anspruch 4, wobei der genannte wenigstens eine Lasertriangulations-Profilometer (31) dazu konfiguriert ist, die Position des Abtastfensters (F) mit einer Verzögerung zwischen 10 und 50 ms zu aktualisieren.

6. Wickelsystem nach einem der vorhergehenden Ansprüche, wobei der genannte wenigstens eine Lasertriangulations-Profilometer (31) eine minimale Abtastfrequenz von 300 Hz aufweist.

7. Wickelsystem nach einem der vorhergehenden Ansprüche, wobei die genannten Detektionsmittel (30) ferner ein Online-Messgerät (32) des Durchmessers des gewalzten Produktes umfassen, wobei das genannte Messgerät geeignet ist, kontinuierlich den Durchmesser des gewalzten Produktes ($\phi$P) zu messen, und stromaufwärts des Verteilers (13) entlang der Zuführlinie des gewalzten Produktes angeordnet ist und wobei die Verarbeitungs- und Berechnungseinheit (200) dazu konfiguriert ist, die von dem genannten Messgerät (31) durchgeführten Durchmesser-Messungen als Werte des Durchmessers des gewalzten Produktes zu verwenden.

8. Wickelsystem nach Anspruch 7, wobei die genannte Verarbeitungs- und Berechnungseinheit (200) dazu konfiguriert ist, die jeweilige Detektionszeit jeder Durchmesser-Messung zuzuordnen.

9. Wickelsystem nach Anspruch 7 oder 8, wobei die genannten vorbestimmten Referenzbetriebsparameter, die von der genannten Steuer- und Befehlseinheit (20) speicherbar sind, bestehen aus:

   - linearer Geschwindigkeit des gewalzten Produktes entlang der Zuführlinie des gewalzten Produktes selbst;
   - Spulendurchmesser;
   - Spulenhöhe.

10. Wickelsystem nach einem der Ansprüche 1 bis 6, wobei die Verarbeitungs- und Berechnungseinheit (20) dazu konfiguriert ist, voreingestellte Werte, die von der genannten Steuer- und Befehlseinheit (20) speicherbar sind, als Werte des Durchmessers des gewalzten Produktes zu verwenden.

11. Wickelsystem nach Anspruch 10, wobei die genannten vorbestimmten Referenzbetriebsparameter, die von der genannten Steuer- und Befehlseinheit (20) speicherbar sind, zumindest umfassen:

   - lineare Geschwindigkeit des gewalzten Produktes entlang der Zuführlinie des gewalzten Produktes selbst;
   - Spulendurchmesser;
   - Spulenhöhe; und
   - Durchmesser des gewalzten Produktes.

12. Wickelsystem nach einem der vorhergehenden Ansprüche, wobei für jede n-te Schicht der sich bildenden Wicklung die Verarbeitungs- und Berechnungseinheit (200) dazu konfiguriert ist, die Translationsgeschwindigkeit des Verteilers mit einer theoretischen Translationsgeschwindigkeit zu initialisieren, die als Funktion von berechnet wird:

   - Wickelzeit einer Windung in der genannten n-ten Schicht;
   - Anzahl der Windungen in der genannten n-ten Schicht.

13. Wickelsystem nach einem der vorhergehenden Ansprüche, wobei für jede n-te Schicht der sich bildenden Wicklung die Verarbeitungs- und Berechnungseinheit (200) dazu konfiguriert ist, die Rotationsgeschwindigkeit der Spule als Funktion von anzupassen:

   - linearer Geschwindigkeit des gewalzten Produktes entlang der Zuführlinie des gewalzten Produktes selbst;
   - Durchmesser der Spule oder der n-1-ten Schicht der sich bildenden Wicklung.

14. Wickelverfahren (1) eines gewalzten Produktes (P), wobei das genannte Produkt (P) mittels eines Wickelsystems (1) nach einem der vorhergehenden Ansprüche zu einer Wicklung gewickelt wird, wobei das genannte Verfahren die folgenden Betriebsschritte umfasst:

   a) kontinuierliches Detektieren des Oberflächenprofils der Wicklung des gewalzten Produktes bei jeder hinzugefügten Windung mittels des genannten Profilometers (31), der relativ zu der genannten Spule so orientiert ist, dass er die Wicklungsoberfläche in einer um die Rotationsachse (Y) winkelig versetzten Position relativ zu dem genannten momentanen Wickelpunkt des gewalzten Produktes abtastet,
   b) rückgekoppeltes Anpassen der Translationsgeschwindigkeit des Verteilers (Vt) bei jeder hinzugefügten Windung, um die Differenz zwischen einem tatsächlichen Betriebsparameter, berechnet auf der Grundlage des von dem genannten Profilometer (31) detektierten Profils der sich bildenden Wicklung, und demselben Betriebsparameter, berechnet auf der Grundlage theoretischer Daten in Bezug auf eine vorbestimmte ideale Wicklung der Wicklung, zu minimieren

      wobei der genannte tatsächliche Betriebsparameter, berechnet auf der Grundlage des von dem genannten Profilometer (31) bei jeder hinzugefügten Windung detektierten Profils der sich bildenden Wicklung, die tatsächliche Höhe (Hr) der n-ten Schicht der sich bildenden Wicklung bei jeder weiteren hinzugefügten Windung relativ zu einem der zwei gegenüberliegenden axialen Enden der Spule ist,
      wobei die Translationsgeschwindigkeit (Vt) des Verteilers rückgekoppelt so angepasst wird, dass die tatsächliche Höhe (Hr) im Wesentlichen der theoretischen Höhe (Ht) der n-ten Schicht der sich bildenden Wicklung bei jeder weiteren hinzugefügten Windung entspricht, wobei die genannte theoretische Höhe (Ht) auf der Grundlage der Werte des Durchmessers des gewalzten Produktes, die zuvor der Verarbeitungs- und Berechnungseinheit (200) zur Verfügung gestellt wurden, als Funktion der Spulenhöhe berechnet wird.

15. Wickelverfahren nach Anspruch 14, wobei der genannte wenigstens eine Lasertriangulations-Profilometer (31) für jede Windung den radialen Abstand von der Rotationsachse (Y) der Spule und die Höhenposition entlang einer solchen Rotationsachse (Y) detektiert.

16. Wickelverfahren nach Anspruch 14, wobei der Wert des Durchmessers des gewalzten Produktes ($\phi$P) aus kontinuierlichen Messungen am gewalzten Produkt mittels eines Online-Messgerätes (32), das stromaufwärts des Verteilers (13) entlang der Zuführlinie des gewalzten Produktes angeordnet ist, erhalten wird, wobei jede Durchmesser-Messung der jeweiligen Detektionszeit zugeordnet ist.

17. Wickelverfahren nach Anspruch 16, wobei das rückgekoppelte Anpassen der Translationsgeschwindigkeit (Vt) des Verteilers vorbestimmte Referenzbetriebsparameter verwendet, die von der genannten Steuer- und Befehlseinheit (20) gespeichert sind und bestehen aus:

- linearer Geschwindigkeit des gewalzten Produktes entlang der Zuführlinie des gewalzten Produktes selbst;
- Spulendurchmesser;
- Spulenhöhe.

18. Wickelverfahren nach Anspruch 14, wobei der Wert des Durchmessers des gewalzten Produktes ($\phi$P) ein voreingestellter Nennwert ist.

19. Wickelverfahren nach Anspruch 18, wobei das rückgekoppelte Anpassen der Translationsgeschwindigkeit (Vt) des Verteilers vorbestimmte Referenzbetriebsparameter verwendet, die von der genannten Steuer- und Befehlseinheit (20) gespeichert sind und bestehen aus:

- linearer Geschwindigkeit des gewalzten Produktes entlang der Zuführlinie des gewalzten Produktes selbst;
- Spulendurchmesser;
- Spulenhöhe; und
- Durchmesser des gewalzten Produktes.

20. Wickelverfahren nach einem der Ansprüche 14 bis 19, wobei für jede n-te Schicht der sich bildenden Wicklung die Translationsgeschwindigkeit (Vt) des Verteilers mit einer theoretischen Translationsgeschwindigkeit initialisiert wird, die als Funktion von berechnet wird:

- Wickelzeit einer Windung in der genannten n-ten Schicht;
- Anzahl der Windungen in der genannten n-ten Schicht.

21. Wickelverfahren nach einem der Ansprüche 14 bis 20, wobei für jede n-te Schicht der sich bildenden Wicklung die Rotationsgeschwindigkeit der Spule als Funktion von angepasst wird:

- linearer Geschwindigkeit des gewalzten Produktes entlang der Zuführlinie des gewalzten Produktes selbst;
- Durchmesser der Spule oder der n-1-ten Schicht der sich bildenden Wicklung.

## Revendications

1. A système d'enroulement (1) d'un produit laminé (P)

    comprenant :

        - un enrouleur (10) comprenant à son tour :
        - un tambour d'enroulement (11) et
        - des moyens de rotation du tambour (12) adaptés à faire tourner le tambour (11) autour d'un axe de rotation (Y),
        - un distributeur (13) qui est adapté à guider le positionnement du produit laminé vers le tambour en un point d'enroulement instantané et est pourvu d'une sortie d'alimentation du produit (14);

    des moyens de translation du distributeur (15) adaptés à déplacer le distributeur (13) par rapport au tambour (11) de sorte que la sortie d'alimentation du produit (14) effectue un mouvement de translation alterné du tambour parallèle à l'axe de rotation (Y) de manière à distribuer le produit laminé sur le tambour et à faire varier dans le temps le point d'enroulement instantané du produit laminé sur le tambour et sur la bobine en formation,

        - une unité de contrôle et de commande (20) qui est configurée pour commander les moyens de rotation (12) et les moyens de translation (15) de manière coordonnée, conformément à un programme d'enroulement prédéfini qui est fonction de paramètres de fonctionnement de référence prédéfinis mémorisables par ladite unité de contrôle et de commande (20) et de paramètres de fonctionnement pouvant être acquis en temps réel pendant l'enroulement par l'unité de contrôle et de commande (20) au moyen de moyens de détection (30) dont le système d'enroulement (1) est pourvu,

dans lequel lesdits moyens de détection (30) comprennent au moins un profilomètre à triangulation laser (31) qui est substantiellement disposé dans une position diamétralement opposée au distributeur (13) par rapport au tambour (11) et est adapté à détecter en continu le profil de surface de la bobine de produit laminé à chaque spire ajoutée, dans lequel ledit profilomètre (31) est orienté par rapport audit tambour de manière à balayer la surface de la bobine dans une position décalée angulairement autour de l'axe de rotation (Y) par rapport audit point d'enroulement instantané du produit laminé,

et dans lequel ledit système d'enroulement comprend en outre

une unité de traitement et de calcul (200) qui, sur la base du profil de surface de la bobine de produit laminé détecté par le profilomètre (32) à chaque spire ajoutée, est configurée pour ajuster en rétroaction la vitesse de translation du distributeur de manière à minimiser la différence entre un paramètre de fonctionnement réel calculé sur la base du profil de la bobine en formation détecté par ledit profilomètre (31) et le même paramètre de fonctionnement calculé sur la base de données théoriques relatives à un enroulement idéal prédéfini de la bobine **caractérisé en ce que**

ledit paramètre de fonctionnement réel, calculé sur

la base du profil de la bobine en formation détecté par ledit profilomètre (31) à chaque spire ajoutée, est la hauteur réelle (Hr) de la n-ième couche de la bobine en formation à chaque spire supplémentaire ajoutée par rapport à l'une des deux extrémités axiales opposées du tambour, dans lequel ledit programme d'enroulement prédéfini est destiné à ajuster en rétroaction la vitesse de translation du distributeur de sorte que la hauteur réelle (Hr) soit substantiellement équivalente à la hauteur théorique (Ht) de la n-ième couche de la bobine en formation à chaque spire supplémentaire ajoutée, ladite hauteur théorique (Ht) étant calculée sur la base des valeurs du diamètre du produit laminé préalablement mises à disposition de l'unité de traitement et de calcul (200), en fonction de la hauteur du tambour.

2. Un système d'enroulement selon la revendication 1, dans lequel la position d'orientation dudit profilomètre (31) par rapport audit tambour pour balayer la surface de la bobine est décalée angulairement autour de l'axe de rotation (Y) d'un angle compris entre 75° et 105° par rapport audit point d'enroulement instantané du produit laminé.

3. Un système d'enroulement selon l'une quelconque des revendications précédentes, dans lequel ledit au moins un profilomètre à triangulation laser (31) est adapté à détecter pour chaque spire la distance radiale par rapport à l'axe de rotation (Y) du tambour et la position en hauteur le long dudit axe de rotation (Y).

4. Un système d'enroulement selon l'une quelconque des revendications précédentes, dans lequel ledit au moins un profilomètre à triangulation laser (31) peut être géré électroniquement de manière à balayer à l'intérieur d'une fenêtre de balayage (F) ayant une hauteur (H) inférieure à la hauteur du tambour (11) le long de l'axe de rotation (Y), de préférence ladite fenêtre de balayage (F) étant mobile parallèlement à l'axe de rotation (Y) de manière à suivre la bobine en formation à chaque spire ajoutée.

5. Un système d'enroulement selon la revendication 4, dans lequel ledit au moins un profilomètre à triangulation laser (31) est configuré pour mettre à jour la position de la fenêtre de balayage (F) avec un retard compris entre 10 et 50 ms.

6. Un système d'enroulement selon l'une quelconque des revendications précédentes, dans lequel ledit au moins un profilomètre à triangulation laser (31) présente une fréquence minimale de balayage de 300 Hz.

7. Un système d'enroulement selon l'une quelconque des revendications précédentes, dans lequel lesdits moyens de détection (30) comprennent en outre un mesureur en ligne (32) du diamètre du produit laminé, ledit mesureur étant adapté à mesurer en continu le diamètre du produit laminé ($\phi$P) et étant placé en amont du distributeur (13) le long de la ligne d'alimentation du produit laminé et dans lequel l'unité de traitement et de calcul (200) est configurée pour utiliser les mesures du diamètre du produit laminé effectuées par ledit mesureur (31) en tant que valeurs du diamètre du produit laminé.

8. Un système d'enroulement selon la revendication 7, dans lequel ladite unité de traitement et de calcul (200) est configurée pour corréler le temps de détection respectif à chaque mesure de diamètre.

9. Un système d'enroulement selon la revendication 7 ou 8, dans lequel lesdits paramètres de fonctionnement de référence prédéfinis mémorisables par ladite unité de contrôle et de commande (20) consistent en :

- vitesse linéaire du produit laminé le long de la ligne d'alimentation du produit laminé lui-même ;
- diamètre du tambour ;
- hauteur du tambour.

10. Un système d'enroulement selon l'une quelconque des revendications 1 à 6, dans lequel l'unité de traitement et de calcul (20) est configurée pour utiliser des valeurs prédéfinies, mémorisables par ladite unité de contrôle et de commande (20), en tant que valeurs du diamètre du produit laminé.

11. Un système d'enroulement selon la revendication 10, dans lequel lesdits paramètres de fonctionnement de référence prédéfinis mémorisables par ladite unité de contrôle et de commande (20) comprennent au moins :

- vitesse linéaire du produit laminé le long de la ligne d'alimentation du produit laminé lui-même ;
- diamètre du tambour ;
- hauteur du tambour ; et
- diamètre du produit laminé.

12. Un système d'enroulement selon l'une quelconque des revendications précédentes, dans lequel pour chaque n-ième couche de la bobine en formation l'unité de traitement et de calcul (200) est configurée pour initialiser la vitesse de translation du distributeur à une vitesse de translation théorique, qui est calculée en fonction de :

- temps d'enroulement d'une spire dans ladite n-ième couche ;
- nombre de spires dans ladite n-ième couche.

13. Un système d'enroulement selon l'une quelconque des revendications précédentes, dans lequel pour chaque n-ième couche de la bobine en formation l'unité de traitement et de calcul (200) est configurée pour ajuster la vitesse de rotation du tambour en fonction de :

- vitesse linéaire du produit laminé le long de la ligne d'alimentation du produit laminé lui-même ;
- diamètre du tambour ou de la n-1-ième couche de la bobine en formation.

14. Procédé d'enroulement (1) d'un produit laminé (P), dans lequel ledit produit (P) est enroulé en une bobine au moyen d'un système d'enroulement (1) selon l'une quelconque des revendications précédentes, ledit procédé comprenant les étapes de fonctionnement suivantes :

a) détecter en continu le profil de surface de la bobine de produit laminé à chaque spire ajoutée au moyen dudit profilomètre (31) orienté par rapport audit tambour de manière à balayer la surface de la bobine dans une position décalée angulairement autour de l'axe de rotation (Y) par rapport audit point d'enroulement instantané du produit laminé,
b) ajuster en rétroaction la vitesse de translation du distributeur (Vt) à chaque spire ajoutée de manière à minimiser la différence entre un paramètre de fonctionnement réel calculé sur la base du profil de la bobine en formation détecté par ledit profilomètre (31) et le même paramètre de fonctionnement calculé sur la base de données théoriques relatives à un enroulement idéal prédéfini de la bobine

dans lequel ledit paramètre de fonctionnement réel, calculé sur la base du profil de la bobine en formation détecté par ledit profilomètre (31) à chaque spire ajoutée, est la hauteur réelle (Hr) de la n-ième couche de la bobine en formation à chaque spire supplémentaire ajoutée par rapport à l'une des deux extrémités axiales opposées du tambour,
dans lequel la vitesse de translation (Vt) du distributeur est ajustée en rétroaction de sorte que la hauteur réelle (Hr) soit substantiellement équivalente à la hauteur théorique (Ht) de la n-ième couche de la bobine en formation à chaque spire supplémentaire ajoutée, ladite hauteur théorique (Ht) étant calculée sur la base des valeurs du diamètre du produit laminé préalablement mises à disposition de l'unité de traitement et de calcul (200), en fonction de la hauteur du tambour.

15. Procédé d'enroulement selon la revendication 14, dans lequel ledit au moins un profilomètre à triangulation laser (31) détecte pour chaque spire la distance radiale par rapport à l'axe de rotation (Y) du tambour et la position en hauteur le long dudit axe de rotation (Y).

16. Procédé d'enroulement selon la revendication 14, dans lequel la valeur du diamètre du produit laminé ($\phi$P) est obtenue à partir de mesures continues sur le produit laminé au moyen d'un mesureur en ligne (32) placé en amont du distributeur (13) le long de la ligne d'alimentation du produit laminé, dans lequel chaque mesure de diamètre est corrélée au temps de détection respectif.

17. Procédé d'enroulement selon la revendication 16, dans lequel l'ajustement en rétroaction de la vitesse de translation (Vt) du distributeur utilise des paramètres de fonctionnement de référence prédéfinis mémorisés par ladite unité de contrôle et de commande (20), qui consistent en :

- vitesse linéaire du produit laminé le long de la ligne d'alimentation du produit laminé lui-même ;
- diamètre du tambour ;
- hauteur du tambour.

**18.** Procédé d'enroulement selon la revendication 14, dans lequel la valeur du diamètre du produit laminé ($\phi$P) est une valeur nominale prédéfinie.

**19.** Procédé d'enroulement selon la revendication 18, dans lequel l'ajustement en rétroaction de la vitesse de translation (Vt) du distributeur utilise des paramètres de fonctionnement de référence prédéfinis mémorisés par ladite unité de contrôle et de commande (20), qui consistent en :

- vitesse linéaire du produit laminé le long de la ligne d'alimentation du produit laminé lui-même ;
- diamètre du tambour ;
- hauteur du tambour ; et
- diamètre du produit laminé.

**20.** Procédé d'enroulement selon l'une quelconque des revendications 14 à 19, dans lequel pour chaque n-ième couche de la bobine en formation la vitesse de translation (Vt) du distributeur est initialisée à une vitesse de translation théorique, qui est calculée en fonction de:

- temps d'enroulement d'une spire dans ladite n-ième couche ;
- nombre de spires dans ladite n-ième couche.

**21.** Procédé d'enroulement selon l'une quelconque des revendications 14 à 20, dans lequel pour chaque n-ième couche de la bobine en formation la vitesse de rotation du tambour est ajustée en fonction de :

- vitesse linéaire du produit laminé le long de la ligne d'alimentation du produit laminé lui-même ;
- diamètre du tambour ou de la n-1-ième couche de la bobine en formation.

FIG.1 - Prior art

FIG.2 - Prior art

FIG.3

FIG.4

FIG.5

FIG.6

FIG.7

FIG.8

FIG.9

FIG.10

FIG.11

EP 4 494 774 B1

FIG.12

FIG.13

**EP 4 494 774 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 3362390 B1
- CA 3109332 A1